# EUROPEAN PATENT SPECIFICATION

(11) **EP 3 886 373 B1**
(45) Date of publication and mention of the grant of the patent: **27.12.2023**
(21) Application number: 20165148.6
(22) Date of filing: 24.03.2020
(51) Int. Cl.: H04L 12/46

(54) **COMMUNICATION SYSTEM AND METHOD FOR OPERATING A COMMUNICATION SYSTEM**
KOMMUNIKATIONSSYSTEM UND VERFAHREN ZUM BETRIEB EINES KOMMUNIKATIONSSYSTEMS
SYSTÈME DE COMMUNICATION ET PROCÉDÉ DE FONCTIONNEMENT D'UN SYSTÈME DE COMMUNICATION

(43) Date of publication of application: 29.09.2021
(73) Proprietor: Rohde & Schwarz GmbH & Co. KG, 81671 München (DE)
(72) Inventor: SPECHT, Philipp, 80799 München (DE)
(74) Representative: Kehl, Ascherl, Liebhoff & Ettmayr Patentanwälte Partnerschaft mbB

(56) References cited:
- EP-A1- 3 531 651
- CN-U- 202 435 428
- KR-B1- 101 527 681
- US-A1- 2019 020 985

## Description

### TECHNICAL FIELD

The invention relates to a communication system and a method for operating a communication system.

### BACKGROUND

Although applicable to any bus system, the present invention will mainly be described in conjunction with time deterministic serial bus systems.

Serial bus systems are often used in applications, where fine-grained control over data transmission and communications is required, e.g. regarding the timing and arbitration of the data transmissions. Such bus systems may accommodate voice communications, data communications or a mix of both communications. Especially, voice communications may be performed digitally, i.e. as data communications.

Communication via such bus systems is often used in critical infrastructure or systems, where determinism of the data communication is important. Such applications may e.g. include vehicle bus systems, building installations, installations in ships, aircrafts or the like.

Usually, the use of serial busses increases the complexity of the installation of a communication system and reduces the flexibility, as compared e.g. to ethernet installations, that allow easily adding routers, switches, gateways etc.

Document EP 3 531 651 A1 discloses an in-vehicle network, where non packet-based data is converted into packet-based data and routed through a packet-based network.

Document US 2019 / 020 985 A1 discloses a vehicle network, where a single On-Board-Unit comprises multiple communication interfaces and provides communication capabilities to other vehicle systems.

Accordingly, there is a need for an improved communication system.

### SUMMARY OF THE INVENTION

The above stated problem is solved by the features of the independent claims. It is understood, that independent claims of a claim category may be formed in analogy to the dependent claims of another claim category.

The present invention may especially be used in applications where data from deterministic serial busses or bus systems, especially time deterministic serial bus systems, has to be transported. That means that the data source may be a data source that provides the outgoing serial data stream over such a time deterministic serial bus.

In deterministic serial bus systems, the exact bandwidth allocated to a communication device, i.e. the data source, and the exact timing of the transmission of data over the deterministic serial bus system is usually known in advance. It is understood, that in such a deterministic serial bus system transmission time may also be allocated to non-deterministic communication, i.e. a deterministic serial bus may also comprise a mixed bus system with deterministic transmissions and non-deterministic transmissions. Further, in such a deterministic serial bus system transmission time may also be reserved for high-priority messages.

A deterministic serial bus may e.g. organize the transmission of data in time frames, wherein a single time frame or a group of time frames may repeat continuously. In the single time frames or group of frames every communication device may be assigned specific communication slots. A communication slot may be seen as a sub-unit of transmission time in a time frame, such a communication scheme may also be called time division multiple access or TDMA based communication.

Further, a section of a time slot may be reserved for high-priority messages that may e.g. be sent only when triggered in a communication device. As explained above, it is also possible to reserve communication time in a frame for non-deterministic communication. Possible types of deterministic serial busses include deterministic CAN variants like e.g. TTCAN or time triggered CAN, FlexRay, LINK22 a.k.a. NILE, or the like.

With the present invention, the data source may be any kind of data source that generates the first serial data stream. Such a data source may e.g. be a radio or radio unit that outputs voice data in the serial data stream. The data source may also be a non-voice data source, like e.g. a radar or a digital device, that outputs digital data in the serial data stream for use by other digital devices. It is understood that the term "digital data" may also comprise analog waveforms, like e.g. radar waveforms from an antenna or voice/audio waveforms, that are converted to digital data in the first serial data stream.

The first and second data converters act like a kind of gateway between two different types of transmission media or transmission systems and bridge the two transmission systems. It is understood, that any kind of packet-based network, like e.g. an IP network, may implement the packet-based network with the present invention. It is understood, that the packet-based network may comprise a plurality of different elements, like e.g. routers, switches, servers, clients and the like.

It is further understood, that in the packet-based data network data encryption may be used. Especially, in the packet-based data network different segments with different security levels may be provided, wherein data encryption may be used in some of the segments as required. Between the single network segments respective encryption and decryption devices may be provided. For example, two unencrypted network segments may be coupled each via an encryption and decryption device to an encrypted network segment. This arrangement allows sending data between the two unencrypted network segments via the respective encryption and decryption devices over the encrypted network segment. The encrypted network segment may e.g. be a segment that is easily accessible, e.g. because of its installation location, however, confidential information may easily be sent over the encrypted network segment.

In another example, a first segment may transport unencrypted data, while the data may be encrypted, e.g. in a respective encryption and decryption device, to be transported over a second, encrypted, network segment of the packet-based data network. A radio may be provided in the second network segment. This arrangement ensures that only encrypted data is transmitted over the radio, while local clients may access the data in the unencrypted network segment. On the recipients side an analogous system may be provided to allow reception of the encrypted data via a radio and forwarding the encrypted data via an encryption and decryption device to an unencrypted network segment.

The data converters may e.g. be seen as clients in the packet-based network that communicate with each other. It is understood, that the communication between the first and second data converters may be a direct communication if their respective packet-based network interfaces are directly coupled to each other. As alternative, the communication between the first and second data converters may be routed over any number of switches, routers and/or gateways, e.g. in case of a multiple-segment packet-based network.

If a specific timing or determinism is required for transmission of the serial data streams, it is understood, that in the packet-based network respective protocols, like RDP in an IP network, may be implemented or that a respective bandwidth reserve, also called over-provisioning, may be provided in the packet-based network. A respective over-provisioning guarantees that there is always enough capacity in the packet-based network to transmit the outgoing packet-based data stream such that the requirements of the communication technology of the serial data streams are complied with.

It is understood, that the first and second data converters may each implement the conversion of the first serial data to the outgoing packet-based data stream and vice versa, i.e. from the packet-based data stream to the second serial data stream, by means of hardware, like CPUs, microcontrollers, DSPs, ASICs, FPGAs, CPLDs, or means of computer program products comprising respective instructions that may be executed by a computing device, like a CPU, microcontroller, DPS or the like, or by a combination of hardware and computer program products. As such, the data converters may be seen as a kind of gateway between the different data transmission technologies. It is understood, that data converters may be used that meet any strict timing requirements imposed on the communication system by the serial bus systems.

The radio that is coupled to the second data converter may be a radio that is capable of communicating the second serial data stream wirelessly according to the respective communication standard that is used for the serial data streams, e.g. LINK22.

With the present invention it is possible to flexibly integrate critical communication that is usually transferred via deterministic bus systems with a packet-based network, like e.g. an IP network. Providing the ability of transferring the serial data streams via the packet-based network allows using widely available and well tested network technology to provide a kind of backbone network for the deterministic bus system.

Therefore, the deterministic bus system, that is used for transmission of critical data, may easily be installed in large area installations, e.g. industrial installations like power plants, refineries, chemical plants, production sites, or other installations, like e.g. hospitals, official buildings, ships, trains and the like.

It is not required with the present invention to install complex, and therefore often very cost intensive, networks for the transmission of the serial data streams. If for example an operations room, like e.g. in a power plant or a ship, is provided on a section of the power plant or ship that is far away from the optimal position of the radio, the distance between the operations room and the radio may be easily bridged with the packet-based network, while the serial data stream is provided by a device that operates on the deterministic bus system to the radio that operates on the same deterministic bus system.

Since deterministic bus systems may include detection mechanisms to detect violations of the determinism rules set out for transmission of the serial data streams, such violations during data transmission may easily be detected and announced e.g. to a respective system operator. As explained above, such violations may be obviated by respective over-provisioning and the use of respective real time protocols in the packet-based network.

Further embodiments of the present invention are subject of the further subclaims and of the following description, referring to the drawings.

The communication system comprises a monitor configured to monitor the state of the radio and to indicate if the monitored radio is in an operational state.

The term "operational state" in this regard refers to the radio being capable of transmitting the received second serial data stream wirelessly or to the second data converter being capable of converting the outgoing packet-based data stream into the second serial data stream. Regarding the first serial data stream, it may be important to know if the second data converter and the radio are operational, and therefore, if the data of the first serial data stream can be transmitted wirelessly by the radio or not. For example, if the communication system is used in one of the above-mentioned cases, e.g. in a power plant or a ship, in case of a failure, it may be important to know if a failure alarm and/or respective voice communication could be transmitted out of the power plant or ship or not.

In case that it is detected that the second data converter or the radio is in a non-operational state, i.e. that the radio is not capable of transmitting the second serial data stream as radio signal, for example a warning signal may be provided to an operator of the communication system and the operator may initiate repair of the defective entity or try to transmit the data via another route.

The monitor may be a dedicated device. However, the monitor may also be included as a sub-unit or sub-function in the second data converter.

The second data converter may e.g. be coupled to the radio via a serial bus system for data transmission. The second data converter may therefore monitor the radio via this serial bus system. It is understood, that in addition or as alternative, dedicated or discrete monitoring lines or interfaces may be provided between the monitor and the second data converter or a dedicated monitor device. The monitoring results may then be forwarded to the respective recipients via the packet-based network. It is understood, that analogously the data source may also be monitored by the first data converter. Generally, the function of the first and second data converters may be monitored e.g. via the packet-based network.

In another embodiment, the communication system may comprise a plurality, i.e. more than one, of radios, wherein at least two second data converters are provided and are coupled between the packet-based network and at least two different ones of the plurality of radios, wherein the monitor may be configured to monitor the state of the at least two second data converters and the plurality of radios and to indicate if the monitored radios and/or second data converters are in an operational state.

In the communication system a plurality of radios may be provided, thus providing the capability to fall back to another radio if the originally used radio is in a non-functional state. As described above, to provide redundancy with regard to the radios also at least another second data converter is provided that is arranged between the packet-based network and one of the radios. It is understood, that the above wording allows a single second data converter to couple to multiple radios. It is however possible to provide a dedicated second data converter for every single one of the plurality of radios. A respective communication system would therefore at least comprise two second data converters coupled to the packet-based network, and a radio coupled to every one of the second data converters. In this embodiment, the monitor may monitor the state of all second data converters and radios and provide respective information.

In a further embodiment, the first data converter may be configured to provide the outgoing packet-based data stream over the packet-based network to one of the second data converters based on the state of the second data converters and the radios as indicated by the monitor.

In the communication system, the first data converter may be configured to transmit the outgoing packet-based data stream to a predefined second data converter, as long as this predefined second data converter and the respective radio are in an operational state.

However, if the monitor indicates that either the respective second data converter or radio is not in an operational state any more, the first data converter may select another one of the second data converters and radios according to the information provided by the monitor. It is understood that in this embodiment, the monitor may also be implemented in the first data converter and/or that multiple different monitors or functions that perform the task of the monitor may be provided in the communication system.

This allows for a very simple fail-over redundancy in the communication system, where a first data converter may autonomously select another second data converter and radio for continuing communications.

In another embodiment, the communication system may comprise a signal router provided in the packet-based network and configured to receive the outgoing packet-based data stream from the first data converter, wherein the signal router is configured to forward the received outgoing packet-based data stream to one of the plurality of radios that is identified by the monitor to be in an operational state.

To allow for an automatic switchover between different radios, especially in case of a failure, the signal router is provided in the packet-based network. With the signal router a more fine-grained control over the signal routes between the first data converters and the second data converters may be provided compared to the embodiment where the first data converter selects the recipient of the packet-based data stream.

In this embodiment, the first data converter may be configured to always provide the outgoing packet-based data stream to the signal router. The signal router may be provided by the monitor directly or indirectly via any other entity with the information about the states of the second data converters and the radios. It is understood, that in one embodiment, the signal router may implement the monitor, i.e. the monitor and the signal router are provided as a single unit.

Since the information about the operational state of the radios is known in the signal router, the signal router may choose which second data converter and/or radio to forward the outgoing packet-based data stream to for wireless transmission.

It is understood, that instead of providing the signal router with the information about the operational state of the of the second data converters and the radios, another entity, for example a central controller or control server, may receive the information and control the signal router accordingly.

In an embodiment, the signal router may be omitted. In such an embodiment, the monitor may signal to an operator of the communication system which radios are in an operational state and the operator may manually choose the second data converter and/or radio to use as recipient of the outgoing packet-based data stream.

In an embodiment, the communication system may comprise a capability database configured to store the radio capabilities of all radios in the communication system, and a control unit coupled to the monitor and the capability database, wherein in case that the monitor detects a radio to be in a non-operational state, the control unit may select a radio with the capability to replace the radio that is in a non-operational state and to configure the radio with the capability to replace the non-operational radio accordingly.

The term "radio capabilities" in this context may refer to the wireless transmission capabilities of the single radios, e.g. regarding frequency, bandwidth and modulation or the like. In addition or as alternative the term "radio capabilities" may also refer to an information that specifies which radio may replace which other radio in the communication system. Instead of referring to radios as single units, the "radio capabilities" may also refer to the capability of a radio to provide one of multiple single communication links provided by another radio.

The control unit may be a dedicated unit. However, it is understood, that the control unit may be integrally provided with the capability database or may be provided with any other entity of the communication system, like e.g. the monitor, a first data converter or the signal router.

The capability database with the control unit in case of a failure of a radio, and in case that it is provided, also the below-mentioned hot-standby radio, allows identifying any other radio in the communication system that may provide the communication capabilities of the defective radio. After identifying the respective radio, the control unit may reconfigure the respective radio, and if required the respective second data converter, to match the configuration of the radio that is to be replaced, i.e. that is in a non-operational state.

In continuation, the control unit may inform the respective first data converter(s) of the replacement radio and the respective second data converter, for the first data converter(s) to direct the outgoing packet-based data stream accordingly. In case that a signal router is provided, this information may also be provided to the signal router.

It is understood, that a radio may service multiple radio links and that replacing in this context may also refer only to single communication links. A single radio may therefore e.g. service high-priority radio links and low-priority radio links at the same time. It is understood, that the explanations provided herein with regard to the replacement of a radio also apply to the replacement of a single radio link.

In another embodiment, the communication system may comprise a hot-standby second data converter and a hot-standby radio, wherein the hot-standby second data converter is configured analogously to another second data converter and wherein the hot-standby radio is configured analogously to another radio.

Radios in the communication system may comprise different configurations for their operation, for example, regarding frequency, bandwidth and modulation. Radios may be reconfigured during operation to accommodate different configurations. However, such a reconfiguration of a radio may require a certain amount of time.

In case of critical radio communications, it may therefore be required to provide a socalled hot-standby radio with the respective hot-standby second data converter. The term "hot-standby" in this regard refers to the hot-standby radio and second data converter being provided in the communication system redundant to the respective radio and second data converter which they provide redundancy for. The hot-standby radio with the respective hot-standby second data converter may for example be identical to the radio and the second data converter they provide redundancy for.

In such a configuration, the hot-standby radio with the respective hot-standby second data converter are not used during the operation of the communication system for other communication tasks. Instead they are only activated to replace the respective radio and second data converter in case of a failure of one of these devices.

This arrangement allows rapidly replacing a failing radio with the respective second data converter. This is especially beneficial with deterministic serial busses, where rigid timing rules have to be met by the single devices in the deterministic serial bus system. With the hot-standby radio and the capability of quickly replacing a defective radio, it is therefore possible to provide an uninterrupted communication especially for deterministic serial bus systems.

In a further embodiment, the radio may be configured to receive incoming radio communications and to provide the second data converter with a downstream serial data stream. In addition, the second data converter may be configured to receive the downstream serial data stream and convert the downstream serial data stream into a downstream packet-based data stream and provide the downstream packet-based data stream over the packet-based network to the first data converter. It is understood, that the second data converter may comprise for data transmission to the first data converter the capabilities of the first data converter for data transmission to the second data converter.

This embodiment provides the second data converter with the same capabilities as the first data converter regarding data transmission over the packet-based network and the communication via a serial bus with the radio instead of the data source. Data transmission from the data source to the radio may in generally be regarded as upstream data transmission. Data transmission from the radio to the data source in contrast may be regarded as downstream data transmission.

As stated above, the second data converter may be capable of providing the downstream data transmission from the radio to the data source via the packet-based network, i.e. in downstream direction, equally to the first data converter providing the serial data stream to the second data converter in upstream direction.

It is understood, that all of the above explanations regarding the first data converter also may be applied to the second data converter and the data transmission in downstream direction. In this case, the second data converter and the radio are to be treated as the data source of the downstream serial data stream. The first data converter and the radio are to be treated as the recipients of the data transmission.

For example, the second data converter may be coupled to or integrate a monitor that provides the second data converter with the state of the first data converter and/or the data source. The second data converter in this exemplary embodiment may be configured to automatically select the recipient of the downstream data transmission in the packet-based network or may route the data over the signal router in downstream direction. A combination with the capability database is also possible. Indication of an error in the receiving device to a user and manual switching to another recipient is also possible. Further, in such a communication system multiple first data converters and radios may be provided as receiving units. First data converters and data sources may be provided as hot-standby units for other first data converter and data sources and in addition or alternative reconfiguration as explained above is also possible for the first data converters and data sources.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a communication system according to the present invention,
Fig. 2 shows a flow diagram of an embodiment of a method according to the present invention,
Fig. 3 shows a block diagram of another embodiment of a communication system according to the present invention,
Fig. 4 shows a block diagram of another embodiment of a communication system according to the present invention, and
Fig. 5 shows a block diagram of another embodiment of a communication system according to the present invention.

In the figures like reference signs denote like elements unless stated otherwise.

### DETAILED DESCRIPTION OF THE DRAWINGS

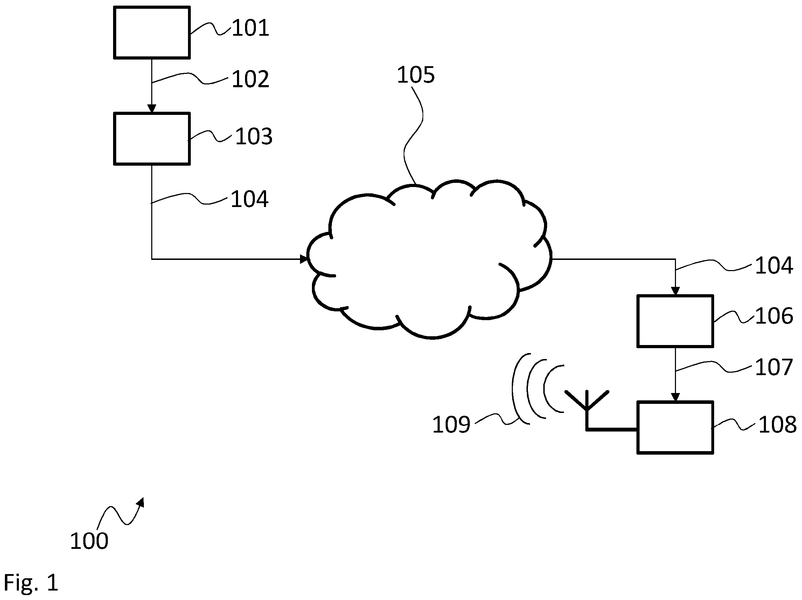

Fig. 1 shows a block diagram of a communication system 100. The communication system 100 comprises a data source 101 that is coupled via a serial bus to a first data converter 103. The first data converter 103 is coupled to packet-based network 105, e.g. an Ethernet network. Further coupled to the packet-based network 105 is a second data converter 106. The second data converter 106 is further coupled via a serial bus to a radio 108. It is understood, that the following explanations refer mostly to the upstream direction of data transmission, i.e. from the data source 101 to the radio 108. It is however also understood, that all the explanations, unless expressly stated otherwise, may also be applied to the downstream direction of data transmission, i.e. from the radio 108 to the data source 101.

During operation of the communication system 100, the data source 101 generates a first serial data stream 102 that comprises data to be transmitted via the communication system 100. The serial bus that connects the data source 101 to the first data converter 103 may e.g. comprise a (time-) deterministic serial bus, like e.g. deterministic CAN variants like e.g. TTCAN or time triggered CAN, FlexRay, LINK22 a.k.a. NILE, or the like.

The first data converter 103 receives the first serial data stream 102 and converts the first serial data stream 102 into an outgoing packet-based data stream 104. The first data converter 103 then outputs the outgoing packet-based data stream 104 into the packet-based network 105. As mentioned above, the packet-based network 105 may comprise an Ethernet network. It is however understood, that any other type of packet-base network is also possible.

The second data converter 106 receives the outgoing packet-based data stream 104 and converts the outgoing packet-based data stream 104 into a second serial data stream 107. The connection between the second data converter 106 and the radio 108 may be based on the same bus as the connection between the data source 101 and the first data converter 103. The second serial data stream 107 is then provided via a serial bus to the radio 108 that outputs the second serial data stream 107 as radio signal 109.

It is understood, that the above-explained signal chain may be travelled backwards for downlink data transmission, i.e. from the radio 108 via the second data converter 106 over the packet-based network 105 to the first data converter 103 and the data source 101. It is also understood, that the data source 101 may also comprise a data sink or receiver.

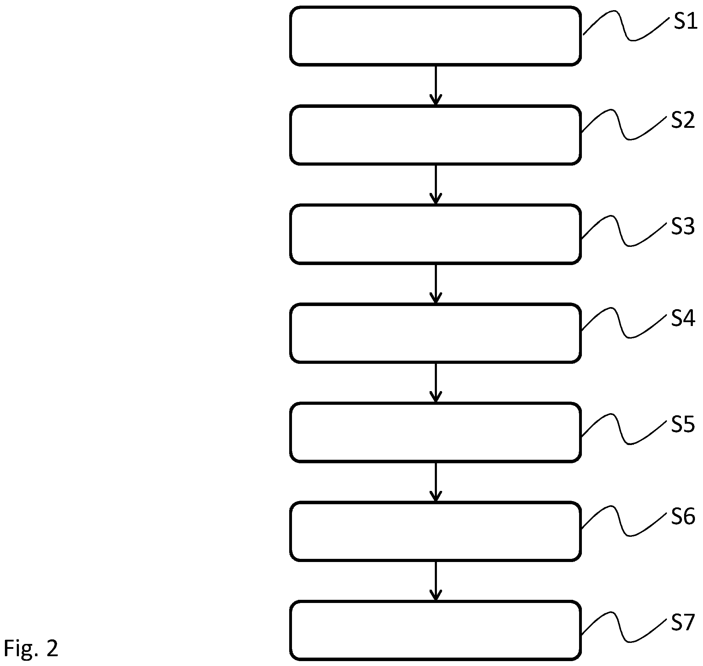

For sake of clarity in the following description of the method-based Fig. 2 the reference signs used in the description of apparatus-based Figs. 1 and 3 to 5 will be maintained.

The method serves for operating a communication system 100, 200, 300, 400 with a data source 101, 201, 301, 401 coupled to a first data converter 103, 203, 303, 403, a second data converter 106, 206, 210, 306, 310, 406, 410, 430 coupled to a radio 108, 208, 212, 308, 312, 408, 412, 432 and a packet-based network 105, 205, 305, 405 coupled between the first data converter 103, 203, 303, 403 and the second data converter 106, 206, 210, 306, 310, 406, 410, 430.

To this end, the method comprises generating S1 a first serial data stream 102, 202, 302, 402 in the data source 101, 201, 301, 401, the first serial data stream 102, 202, 302, 402 comprising data to be transmitted via the communication system 100, 200, 300, 400, converting S2 in the first data converter 103, 203, 303, 403 the first serial data stream 102, 202, 302, 402 into an outgoing packet-based data stream 104, 204, 304, 404, outputting S3 the outgoing packet-based data stream 104, 204, 304, 404 from the first data converter 103, 203, 303, 403 into the packet-based network 105, 205, 305, 405, receiving S4 the outgoing packet-based data stream 104, 204, 304, 404 in the second data converter 106, 206, 210, 306, 310, 406, 410, 430 via the packet-based network 105, 205, 305, 405, converting S5 the outgoing packet-based data stream 104, 204, 304, 404 in the second data converter 106, 206, 210, 306, 310, 406, 410, 430 into a second serial data stream 107, 207, 211, 307, 311, 407, 411, 431, providing S6 the second serial data stream 107, 207, 211, 307, 311, 407, 411, 431 to the radio 108, 208, 212, 308, 312, 408, 412, 432, and outputting S7 the second serial data stream 107, 207, 211, 307, 311, 407, 411, 431 as radio signal 109, 209, 309, 409 by the radio 108, 208, 212, 308, 312, 408, 412, 432.

The method may also comprise monitoring the state 216, 316, 416 of the radio 108, 208, 212, 308, 312, 408, 412, 432 and indicating if the monitored radio 108, 208, 212, 308, 312, 408, 412, 432 is in an operational state, and/or monitoring the state 216, 316, 416 of the second data converter 106, 206, 210, 306, 310, 406, 410, 430 and indicating if the monitored second data converter 106, 206, 210, 306, 310, 406, 410, 430 is in an operational state.

The monitoring allows determining if it is possible to transmit data via the single radios 108, 208, 212, 308, 312, 408, 412, 432, and if the signal chain to the radios 108, 208, 212, 308, 312, 408, 412, 432 is operational.

The communication system 100, 200, 300, 400 may comprises a plurality of radios 108, 208, 212, 308, 312, 408, 412, 432. The method in that case may comprise providing at least two second data converters 106, 206, 210, 306, 310, 406, 410, 430 and coupling the at least two second data converters 106, 206, 210, 306, 310, 406, 410, 430 between the packet-based network 105, 205, 305, 405 and at least two different ones of the plurality of radios 108, 208, 212, 308, 312, 408, 412, 432.

Monitoring may then comprises monitoring the state 216, 316, 416 of the at least two second data converters 106, 206, 210, 306, 310, 406, 410, 430 and the plurality of radios 108, 208, 212, 308, 312, 408, 412, 432 and indicating if the monitored radios 108, 208, 212, 308, 312, 408, 412, 432 and/or second data converters 106, 206, 210, 306, 310, 406, 410, 430 are in an operational state.

In cases where the states of the second data converters 106, 206, 210, 306, 310, 406, 410, 430 and the plurality of radios 108, 208, 212, 308, 312, 408, 412, 432 are known, outputting the outgoing packet-based data stream 104, 204, 304, 404 may comprise providing the outgoing packet-based data stream 104, 204, 304, 404 over the packet-based network 105, 205, 305, 405 to one of the second data converters 106, 206, 210, 306, 310, 406, 410, 430 based on the state 216, 316, 416 of the second data converters 106, 206, 210, 306, 310, 406, 410, 430 and the radios 108, 208, 212, 308, 312, 408, 412, 432 as indicated by the monitoring.

In addition or as alternative, the outgoing packet-based data stream 104, 204, 304, 404 may be received from the first data converter 103, 203, 303, 403 in a signal router 320, 420 and the received outgoing packet-based data stream 104, 204, 304, 404 may be forwarded from the signal router 320, 420 to one of the plurality of radios 108, 208, 212, 308, 312, 408, 412, 432 that is identified by the monitoring to be in an operational state.

To further allow replacing defective radios 108, 208, 212, 308, 312, 408, 412, 432 the radio capabilities 426 of all radios 108, 208, 212, 308, 312, 408, 412, 432 in the communication system 100, 200, 300, 400 may be stored in a capability database 425. In case that during monitoring a radio 108, 208, 212, 308, 312, 408, 412, 432 is detected to be in a non-operational state, a radio 108, 208, 212, 308, 312, 408, 412, 432 with the capability to replace the radio 108, 208, 212, 308, 312, 408, 412, 432 that is in a non-operational state is selected based on the capabilities 426 stored in the capability database 425 and configured to replace the non-operational radio 108, 208, 212, 308, 312, 408, 412, 432 accordingly.

Further, a hot-standby second data converter 106, 206, 210, 306, 310, 406, 410, 430 and a hot-standby radio 212, 312, 412 may be configured analogously to another second data converter 106, 206, 210, 306, 310, 406, 410, 430 and another radio 108, 208, 212, 308, 312, 408, 412, 432. This allows the hot-standby second data converter 106, 206, 210, 306, 310, 406, 410, 430 and the hot-standby radio 212, 312, 412 to instantly replace the respective defective second data converter 106, 206, 210, 306, 310, 406, 410, 430 and/or radio 212, 312, 412.

It is understood, that all the steps applied to the uplink direction may also be applied to the downlink direction. Therefore, the method may comprise receiving incoming radio communications via the radio 108, 208, 212, 308, 312, 408, 412, 432 and providing the second data converter 106, 206, 210, 306, 310, 406, 410, 430 with a downstream serial data stream from the radio 108, 208, 212, 308, 312, 408, 412, 432, converting the downstream serial data stream into a downstream packet-based data stream in the second data converter 106, 206, 210, 306, 310, 406, 410, 430, and providing the downstream packet-based data stream over the packet-based network 105, 205, 305, 405 to the first data converter 103, 203, 303, 403.

The second data converter 106, 206, 210, 306, 310, 406, 410, 430 may be provided for data transmission to the first data converter 103, 203, 303, 403 with the capabilities of the first data converter 103, 203, 303, 403 for data transmission to the second data converter 106, 206, 210, 306, 310, 406, 410, 430.

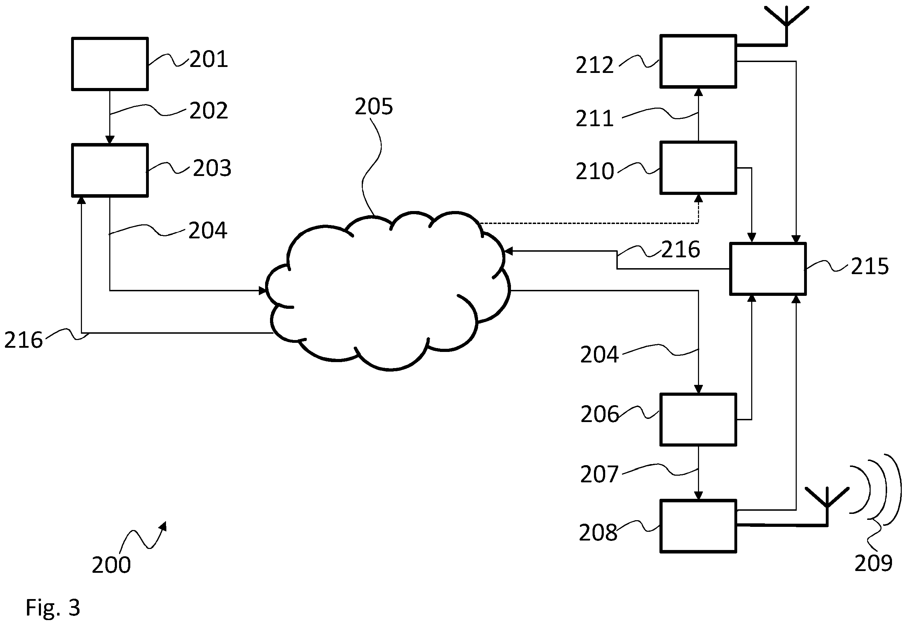

Fig. 3 shows a block diagram of a communication system 200. The communication system 200 is based on the communication system 100. Therefore, the communication system 200 comprises a data source 201 that is coupled via a serial bus to a first data converter 203. The first data converter 203 is coupled to packet-based network 205, e.g. an Ethernet network. Further coupled to the packet-based network 205 is a second data converter 206. The second data converter 206 is further coupled via a serial bus to a radio 208. It is understood, that the following explanations refer mostly to the upstream direction of data transmission, i.e. from the data source 201 to the radio 208. It is however also understood, that all the explanations, unless expressly stated otherwise, may also be applied to the downstream direction of data transmission, i.e. from the radio 208 to the data source 201. Further, the explanations regarding communication system 100 also apply to communication system 200.

In contrast to the communication system 200, the communication system 200 comprises a plurality of radios 208, 212, wherein two radios 208, 212 are expressly shown. Further two second data converters 206, 210 are provided. Second data converter 208 is connected between the packet-based network 205 and radio 208. Second data converter 210 is connected between the packet-based network 205 and radio 212. It is understood, that more radios and second data converters are possible.

The communication system 200 also comprises a monitor 215 that is coupled to the second data converters 206, 210 and the radios 208, 212. The monitor 215 monitors the state 216 of the radios 208, 212 and indicates if the monitored radios 208, 212 are in an operational state. The monitor 215 in addition or as alternative also monitors the state 216 of the second data converters 206, 210 and indicates if the monitored second data converters 206, 210 are in an operational state.

In the communication system 200 the radio 212 and the second data converter 210 may be seen as a hot-standby second data converter 210 and a hot-standby radio 212. This means that the hot-standby second data converter 210 is configured analogously to another second data converter, in this case to second data converter 206 and that the hot-standby radio 212 is configured analogously to another radio, in this case the radio 208. This means, that the hot-standby second data converter 210 and radio 212 run concurrently with second data converter 206 and radio 208 and are only used if second data converter 206 or radio 208 are detected to be in a non-operable state. This arrangement allows replacing a non-operable second data converter 206 or radio 208 very quickly.

The state 216 of the second data converter 206 or radio 208 may e.g. be provided via the packet-based network 205 to the first data converter 203. The first data converter in case that the second data converter 206 or radio 208 is non-operable may then provide the outgoing packet-based data stream 204 to the second data converter 210. Alternatively, the state 216 may be provided to a human operator who may then manually change the receiver of the outgoing packet-based data stream 204. Alternatively, a signal router as explained below may adapt the receiver of the outgoing packet-based data stream 204.

It is understood, that the monitor 215 may also monitor the hot-standby second data converter 210 and the hot-standby radio 212. This allows detecting a fault in the a hot-standby second data converter 210 and a hot-standby radio 212 early and replacing the a hot-standby second data converter 210 and a hot-standby radio 212 while they are not yet required.

It is also possible for the first data converter 203 to send the outgoing packet-based data stream 204 as a multicast data stream to the second data converters 206 and 210 concurrently. In case of failure of the second data converter 206 it is then only necessary to activate the radio 212.

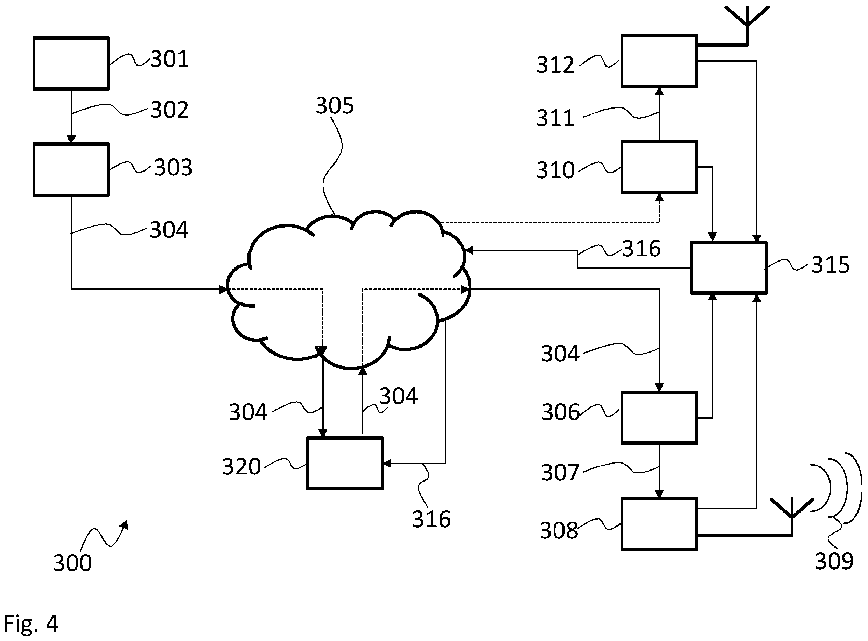

Fig. 4 shows a block diagram of a communication system 300. The communication system 300 is based on the communication system 200. The communication system 300 therefore comprises a data source 301 that is coupled via a serial bus to a first data converter 303. The first data converter 303 is coupled to packet-based network 305, e.g. an Ethernet network. Further coupled to the packet-based network 305 are second data converters 306 and 310. The second data converters 306 and 310 are further coupled each via a serial bus to a radio 308 and 312. The communication system 300 also comprises a monitor 315 that is coupled to the second data converters 306, 310 and the radios 308, 312.

Communication system 300 further comprises a signal router 320. The signal router 320 serves to distribute the outgoing packet-based data stream 304 to the respective second data converters 306, 310. It is understood that more than two second data converters 306, 310 are possible.

It is understood, that the following explanations refer mostly to the upstream direction of data transmission, i.e. from the data source 301 to the radios 308 and 312. It is however also understood, that all the explanations, unless expressly stated otherwise, may also be applied to the downstream direction of data transmission, i.e. from the radio 308 or the radio 312 to the data source 301. Further, the explanations regarding communication system 200 or the respective components also apply to communication system 300 or the respective components.

The outgoing packet-based data stream 304 is in this embodiment always provided from the first data converter 303 to the signal router 320. The signal router 320 may then decide to which second data converter 306, 310 to forward the outgoing packet-based data stream 304. In the communication system 300 the signal router 320 is provided with the state 316 of the single second data converters 306, 310 and radios 308, 312 to decide which second data converters 306, 310 and radios 308, 312 are in an operational state. It is understood, that the monitor 315 may e.g. be implemented as integral part of the signal router 320 in an embodiment.

The signal router 320 provides for a centralized management of all the communication flows in the communication system 300. The functionality of the signal router 320 therefore needs not be provided in all the single data converters of communication system 300.

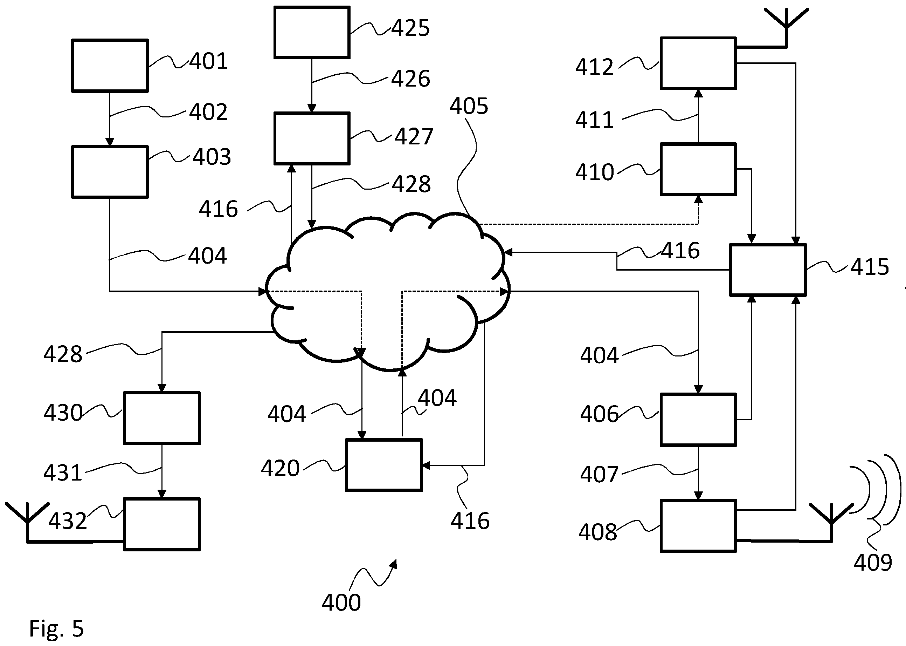

Fig. 5 shows a block diagram of a communication system 400. The communication system 400 is based on communication system 300. Therefore, the communication system 400 comprises a data source 401 that is coupled via a serial bus to a first data converter 403. The first data converter 403 is coupled to packet-based network 405, e.g. an Ethernet network. Further coupled to the packet-based network 405 are second data converters 406 and 410. The second data converters 406 and 410 are further coupled each via a serial bus to a radio 408 and 412. The communication system 400 also comprises a monitor 415 that is coupled to the second data converters 406, 410 and the radios 408, 412. Communication system 400 further comprises another second data converter 430 with a respective radio 432, and a signal router 420. The signal router 420 serves to distribute the outgoing packet-based data stream 404 to the respective second data converters 406, 410, 430.

It is understood, that the following explanations refer mostly to the upstream direction of data transmission, i.e. from the data source 401 to the radios 408 and 412. It is however also understood, that all the explanations, unless expressly stated otherwise, may also be applied to the downstream direction of data transmission, i.e. from the radio 408 or the radio 412 to the data source 401. Further, the explanations regarding communication system 300 or the respective components also apply to communication system 400 or the respective components.

The communication system 400 further comprises a capability database 425. The capability database 425 may provide a control unit 427 with information about the radio capabilities of the single radios 408, 412, 432 in the communication system 400. This information allows the control unit 427 to decide, which radio 408, 412. 432 could substitute a non-operational radio 408, 412, 432 when configured accordingly.

In case that is necessary to substitute one of the radios 408, 412, 432 with another radio, the control unit 427 may then reconfigure the respective radio 408, 412, 432. The outgoing packet-based data stream 404 may then be rescheduled or re-routed accordingly, e.g. by signal router 410.

In contrast to the above-mentioned hot-standby devices, the capability database allows reconfiguring radios 408, 412, 432 that are used for other transmission channels or lines to substitute an important radio 408, 412, 432 by reconfiguration. The control unit 427 may e.g. provide respective configuration data 428, e.g. regarding frequencies, bandwidth and modulation, to the respective radio 408, 412, 432.

For example, a radio 408, 412, 432 that is used for low-priority communications may with the control unit 427 be reconfigured to drop the low-priority communications and accommodate communications with higher priorities.

It is understood, that the capability database 425 and the control unit 427 may also be provided in a communication system without the signal router 410, where for example the first data converter 403 decides to which second data converter 406, 410 to send the outgoing packet-based data stream 404.

In all the above examples, only one data source 101, 201, 301, 401 is shown. It is however understood, that any number of data sources is possible. Further, any other number of radios and second data converters than shown in the Figures and explained above is possible.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

### List of reference signs

- 100, 200, 300, 400: communication system
- 101, 201, 301, 401: data source
- 102, 202, 302, 402: first serial data stream
- 103, 203, 303, 403: first data converter
- 104, 204, 304, 404: outgoing packet-based data stream
- 105, 205, 305, 405: packet-based network
- 106, 206, 210, 306, 310, 406, 410, 430: second data converter
- 107, 207, 211, 307, 311, 407, 411, 431: second serial data stream
- 108, 208, 212, 308, 312, 408, 412, 432: radio
- 109, 209, 309, 409: radio signal

- 215, 315, 415: monitor
- 216, 316, 416: state

- 320, 420: signal router

- 425: capability database
- 426: radio capabilities
- 427: control unit
- 428: configuration data

- S1, S2, S3, S4, S5, S6, SS7: method steps

## Claims

1. Communication system (100, 200, 300, 400) comprising:
a data source (101, 201, 301, 401) configured to generate a first serial data stream (102, 202, 302, 402), the first serial data stream (102, 202, 302, 402) comprising data to be transmitted via the communication system (100, 200, 300, 400),
a first data converter (103, 203, 303, 403) coupled to the data source (101, 201, 301, 401) and configured to receive the first serial data stream (102, 202, 302, 402) and to convert the first serial data stream (102, 202, 302, 402) into an outgoing packet-based data stream (104, 204, 304, 404),
a packet-based network (105, 205, 305, 405), wherein the first data converter (103, 203, 303, 403) is coupled to the packet-based network (105, 205, 305, 405) and is configured to output the outgoing packet-based data stream (104, 204, 304, 404) into the packet-based network (105, 205, 305, 405),
at least two second data converters (106, 206, 210, 306, 310, 406, 410, 430) coupled to the packet-based network (105, 205, 305, 405) and configured to receive the outgoing packet-based data stream (104, 204, 304, 404) and to convert the outgoing packet-based data stream (104, 204, 304, 404) into a second serial data stream (107, 207, 211, 307, 311, 407, 411, 431),
a plurality of radios (108, 208, 212, 308, 312, 408, 412, 432), wherein the at least two second data converters (106, 206, 210, 306, 310, 406, 410, 430) are coupled between the packet-based network (105, 205, 305, 405) and at least two different ones of the plurality of radios (108, 208, 212, 308, 312, 408, 412, 432), wherein the second data converters (106, 206, 210, 306, 310, 406, 410, 430) are configured to provide the second serial data stream (107, 207, 211, 307, 311, 407, 411, 431) to the respective radios (108, 208, 212, 308, 312, 408, 412, 432) and wherein the radios (108, 208, 212, 308, 312, 408, 412, 432) are configured to output the second serial data stream (107, 207, 211, 307, 311, 407, 411, 431) as radio signal (109, 209, 309, 409), and
**characterized by**
a monitor (215, 315, 415) configured to monitor the state (216, 316, 416) of the plurality of radios (108, 208, 212, 308, 312, 408, 412, 432) and to indicate if the monitored radios (108, 208, 212, 308, 312, 408, 412, 432) are in an operational state.

2. Communication system (100, 200, 300, 400) according to claim 1, wherein the first data converter (103, 203, 303, 403) is configured to provide the outgoing packet-based data stream (104, 204, 304, 404) over the packet-based network (105, 205, 305, 405) to one of the second data converters (106, 206, 210, 306, 310, 406, 410, 430) based on the state (216, 316, 416) of the second data converters (106, 206, 210, 306, 310, 406, 410, 430) and the radios (108, 208, 212, 308, 312, 408, 412, 432) as indicated by the monitor (215, 315, 415).

3. Communication system (100, 200, 300, 400) according to claim 1, comprising:
a signal router (320, 420) provided in the packet-based network (105, 205, 305, 405) and configured to receive the outgoing packet-based data stream (104, 204, 304, 404) from the first data converter (103, 203, 303, 403),
wherein the signal router (320, 420) is configured to forward the received outgoing packet-based data stream (104, 204, 304, 404) to one of the plurality of radios (108, 208, 212, 308, 312, 408, 412, 432) that is identified by the monitor (215, 315, 415) to be in an operational state.

4. Communication system (100, 200, 300, 400) according to any one of the preceding claims 2 to 5, comprising a capability database (425) configured to store the radio capabilities (426) of all radios (108, 208, 212, 308, 312, 408, 412, 432) in the communication system (100, 200, 300, 400), and
a control unit (427) coupled to the monitor (215, 315, 415) and the capability database (425),
wherein in case that the monitor (215, 315, 415) detects a radio (108, 208, 212, 308, 312, 408, 412, 432) to be in a non-operational state, the control unit (427) is configured to select based on the stored radio capabilities (426) a radio (108, 208, 212, 308, 312, 408, 412, 432) with the capability to replace the radio (108, 208, 212, 308, 312, 408, 412, 432) that is in a non-operational state and to configure the radio (108, 208, 212, 308, 312, 408, 412, 432) with the capability to replace the non-operational radio (108, 208, 212, 308, 312, 408, 412, 432) accordingly.

5. Communication system (100, 200, 300, 400) according to any one of the preceding claims, comprising a hot-standby second data converter (106, 206, 210, 306, 310, 406, 410, 430) and a hot-standby radio (212, 312, 412), wherein the hot-standby second data converter (106, 206, 210, 306, 310, 406, 410, 430) is configured analogously to another second data converter (106, 206, 210, 306, 310, 406, 410, 430) and wherein the hot-standby radio (212, 312, 412) is configured analogously to another radio (108, 208, 212, 308, 312, 408, 412, 432).

6. Communication system (100, 200, 300, 400) according to any one of the preceding claims, wherein the radio (108, 208, 212, 308, 312, 408, 412, 432) is configured to receive incoming radio communications and to provide the second data converter (106, 206, 210, 306, 310, 406, 410, 430) with a downstream serial data stream, and
wherein the second data converter (106, 206, 210, 306, 310, 406, 410, 430) is configured to receive the downstream serial data stream and convert the downstream serial data stream into a downstream packet-based data stream and provide the downstream packet-based data stream over the packet-based network (105, 205, 305, 405) to the first data converter (103, 203, 303, 403),
especially wherein the second data converter (106, 206, 210, 306, 310, 406, 410, 430) comprises for data transmission to the first data converter (103, 203, 303, 403) the capabilities of the first data converter (103, 203, 303, 403) for data transmission to the second data converter (106, 206, 210, 306, 310, 406, 410, 430).

7. Method for operating a communication system (100, 200, 300, 400) with a data source (101, 201, 301, 401) coupled to a first data converter (103, 203, 303, 403), at least two second data converters (106, 206, 210, 306, 310, 406, 410, 430), each coupled between two different ones of a plurality of radios (108, 208, 212, 308, 312, 408, 412, 432) and a packet-based network (105, 205, 305, 405) coupled between the first data converter (103, 203, 303, 403) and the at least two second data converters (106, 206, 210, 306, 310, 406, 410, 430), the method comprising the steps of:
generating (S1) a first serial data stream (102, 202, 302, 402) in the data source (101, 201, 301, 401), the first serial data stream (102, 202, 302, 402) comprising data to be transmitted via the communication system (100, 200, 300, 400),
converting (S2) in the first data converter (103, 203, 303, 403) the first serial data stream (102, 202, 302, 402) into an outgoing packet-based data stream (104, 204, 304, 404),
outputting (S3) the outgoing packet-based data stream (104, 204, 304, 404) from the first data converter (103, 203, 303, 403) into the packet-based network (105, 205, 305, 405),
receiving (S4) the outgoing packet-based data stream (104, 204, 304, 404) in the at least two second data converters (106, 206, 210, 306, 310, 406, 410, 430) via the packet-based network (105, 205, 305, 405),
converting (S5) the outgoing packet-based data stream (104, 204, 304, 404) in the second data converters (106, 206, 210, 306, 310, 406, 410, 430) into a second serial data stream (107, 207, 211, 307, 311, 407, 411, 431),
providing (S6) the second serial data stream (107, 207, 211, 307, 311, 407, 411, 431) to the respective radios (108, 208, 212, 308, 312, 408, 412, 432),
outputting (S7) the second serial data stream (107, 207, 211, 307, 311, 407, 411, 431) as radio signal (109, 209, 309, 409) by the respective radios (108, 208, 212, 308, 312, 408, 412, 432), and
**characterized by**
monitoring the state (216, 316, 416) of the plurality of radios (108, 208, 212, 308, 312, 408, 412, 432) and indicating if the monitored radios (108, 208, 212, 308, 312, 408, 412, 432) are in an operational state.

8. Method according to claim 7, wherein outputting the outgoing packet-based data stream (104, 204, 304, 404) comprises providing the outgoing packet-based data stream (104, 204, 304, 404) over the packet-based network (105, 205, 305, 405) to one of the second data converters (106, 206, 210, 306, 310, 406, 410, 430) based on the state (216, 316, 416) of the second data converters (106, 206, 210, 306, 310, 406, 410, 430) and the radios (108, 208, 212, 308, 312, 408, 412, 432) as indicated by the monitoring; and/or
comprising receiving the outgoing packet-based data stream (104, 204, 304, 404) from the first data converter (103, 203, 303, 403) in a signal router (320, 420) and forwarding the received outgoing packet-based data stream (104, 204, 304, 404) from the signal router (320, 420) to one of the plurality of radios (108, 208, 212, 308, 312, 408, 412, 432) that is identified by the monitoring to be in an operational state.

9. Method according to any one of the preceding claims 7 to 8, comprising storing the radio capabilities (426) of all radios (108, 208, 212, 308, 312, 408, 412, 432) in the communication system (100, 200, 300, 400) in a capability database (425),
wherein in case that during monitoring a radio (108, 208, 212, 308, 312, 408, 412, 432) is detected to be in a non-operational state, a radio (108, 208, 212, 308, 312, 408, 412, 432) with the capability to replace the radio (108, 208, 212, 308, 312, 408, 412, 432) that is in a non-operational state is selected and configured to replace the non-operational radio (108, 208, 212, 308, 312, 408, 412, 432) accordingly based on the stored radio capabilities (426).

10. Method according to any one of the preceding claims 7 to 9, comprising configuring a hot-standby second data converter (106, 206, 210, 306, 310, 406, 410, 430) and a hot-standby radio (212, 312, 412) analogously to another second data converter (106, 206, 210, 306, 310, 406, 410, 430) and another radio (108, 208, 212, 308, 312, 408, 412, 432).

11. Method according to any one of the preceding claims 7 to 10, comprising receiving incoming radio communications via the radio (108, 208, 212, 308, 312, 408, 412, 432) and providing the second data converter (106, 206, 210, 306, 310, 406, 410, 430) with a downstream serial data stream from the radio (108, 208, 212, 308, 312, 408, 412, 432),
converting the downstream serial data stream into a downstream packet-based data stream in the second data converter (106, 206, 210, 306, 310, 406, 410, 430), and
providing the downstream serial data stream over the packet-based network (105, 205, 305, 405) to the first data converter (103, 203, 303, 403),
especially wherein the second data converter (106, 206, 210, 306, 310, 406, 410, 430) is provided for data transmission to the first data converter (103, 203, 303, 403) with the capabilities of the first data converter (103, 203, 303, 403) for data transmission to the second data converter (106, 206, 210, 306, 310, 406, 410, 430).

## Patentansprüche

1. Kommunikationssystem (100, 200, 300, 400), das aufweist:
eine Datenquelle (101, 201, 301, 401), die konfiguriert ist, um einen ersten seriellen Datenstrom (102, 202, 302, 402) zu erzeugen, wobei der erste serielle Datenstrom (102, 202, 302, 402) Daten aufweist, die über das Kommunikationssystem (100, 200, 300, 400) zu übertragen sind,
einen ersten Datenkonverter (103, 203, 303, 403), der mit der Datenquelle (101, 201, 301, 401) gekoppelt und so konfiguriert ist, dass er den ersten seriellen Datenstrom (102, 202, 302, 402) empfängt und den ersten seriellen Datenstrom (102, 202, 302, 402) in einen ausgehenden paketbasierten Datenstrom (104, 204, 304, 404) umwandelt,
ein paketbasiertes Netzwerk (105, 205, 305, 405), wobei der erste Datenkonverter (103, 203, 303, 403) mit dem paketbasierten Netzwerk (105, 205, 305, 405) gekoppelt ist und so konfiguriert ist, dass er den ausgehenden paketbasierten Datenstrom (104, 204, 304, 404) in das paketbasierte Netzwerk (105, 205, 305, 405) ausgibt,
mindestens zwei zweite Datenkonverter (106, 206, 210, 306, 310, 406, 410, 430), die mit dem paketbasierten Netzwerk (105, 205, 305, 405) gekoppelt und so konfiguriert sind, dass sie den ausgehenden paketbasierten Datenstrom (104, 204, 304, 404) empfangen und den ausgehenden paketbasierten Datenstrom (104, 204, 304, 404) in einen zweiten seriellen Datenstrom (107, 207, 211, 307, 311, 407, 411, 431) umwandeln,
eine Vielzahl von Funkgeräten (108, 208, 212, 308, 312, 408, 412, 432), wobei die mindestens zwei zweiten Datenkonverter (106, 206, 210, 306, 310, 406, 410, 430) zwischen dem paketbasierten Netzwerk (105, 205, 305, 405) und mindestens zwei verschiedenen der Vielzahl von Funkgeräten (108, 208, 212, 308, 312, 408, 412, 432) gekoppelt sind, wobei die zweiten Datenkonverter (106, 206, 210, 306, 310, 406, 410, 430) so konfiguriert sind, dass sie den zweiten seriellen Datenstrom (107, 207, 211, 307, 311, 407, 411, 431) an die jeweiligen Funkgeräte (108, 208, 212, 308, 312, 408, 412, 432) und wobei die Funkgeräte (108, 208, 212, 308, 312, 408, 412, 432) konfiguriert sind, den zweiten seriellen Datenstrom (107, 207, 211, 307, 311, 407, 411, 431) als Funksignal (109, 209, 309, 409) auszugeben, und
**gekennzeichnet durch**
einen Monitor (215, 315, 415), der so konfiguriert ist, dass er den Zustand (216, 316, 416) der Vielzahl von Funkgeräten (108, 208, 212, 308, 312, 408, 412, 432) überwacht und anzeigt, ob sich die überwachten Funkgeräte (108, 208, 212, 308, 312, 408, 412, 432) in einem Betriebszustand befinden.

2. Kommunikationssystem (100, 200, 300, 400) nach Anspruch 1, wobei der erste Datenkonverter (103, 203, 303, 403) so konfiguriert ist, dass er den ausgehenden paketbasierten Datenstrom (104, 204, 304, 404) über das paketbasierte Netzwerk (105, 205, 305, 405) an einen der zweiten Datenkonverter (106, 206, 210, 306, 310, 406, 410, 430) zu übermitteln, und zwar auf der Grundlage des Zustands (216, 316, 416) der zweiten Datenkonverter (106, 206, 210, 306, 310, 406, 410, 430) und der Funkgeräte (108, 208, 212, 308, 312, 408, 412, 432), wie vom Monitor (215, 315, 415) angezeigt.

3. Kommunikationssystem (100, 200, 300, 400) nach Anspruch 1, das aufweist:
einen Signalrouter (320, 420), der in dem paketbasierten Netzwerk (105, 205, 305, 405) vorgesehen und so konfiguriert ist, dass er den ausgehenden paketbasierten Datenstrom (104, 204, 304, 404) von dem ersten Datenkonverter (103, 203, 303, 403) empfängt,
wobei der Signalrouter (320, 420) so konfiguriert ist, dass er den empfangenen ausgehenden paketbasierten Datenstrom (104, 204, 304, 404) an eines der mehreren Funkgeräte (108, 208, 212, 308, 312, 408, 412, 432) weiterleitet, das von dem Monitor (215, 315, 415) als in einem Betriebszustand befindlich identifiziert wird.

4. Kommunikationssystem (100, 200, 300, 400) nach einem der vorhergehenden Ansprüche 2 bis 5, dass eine Fähigkeitsdatenbank (425) aufweist, die so konfiguriert ist, dass sie die Funkfähigkeiten (426) aller Funkgeräte (108, 208, 212, 308, 312, 408, 412, 432) in dem Kommunikationssystem (100, 200, 300, 400) speichert, und
eine Steuereinheit (427), die mit dem Monitor (215, 315, 415) und der Fähigkeitsdatenbank (425) gekoppelt ist,
wobei für den Fall, dass der Monitor (215, 315, 415) erkennt, dass sich ein Funkgerät (108, 208, 212, 308, 312, 408, 412, 432) in einem nicht betriebsbereiten Zustand befindet, die Steuereinheit (427) konfiguriert ist, auf der Grundlage der gespeicherten Funkfähigkeiten (426) ein Funkgerät (108, 208, 212, 308, 312, 408, 412, 432) mit der Fähigkeit auszuwählen, das Funkgerät (108, 208, 212, 308, 312, 408, 412, 432) zu ersetzen, das sich in einem nicht betriebsbereiten Zustand befindet, und das Funkgerät (108, 208, 212, 308, 312, 408, 412, 432) mit der Fähigkeit zu konfigurieren, das nicht betriebsbereite Funkgerät (108, 208, 212, 308, 312, 408, 412, 432) entsprechend zu ersetzen.

5. Kommunikationssystem (100, 200, 300, 400) nach einem der vorhergehenden Ansprüche, das einen zweiten Hot-Standby-Datenkonverter (106, 206, 210, 306, 310, 406, 410, 430) und ein Hot-Standby-Funkgerät (212, 312, 412) aufweist, wobei der zweite Hot-Standby-Datenkonverter (106, 206, 210, 306, 310, 406, 410, 430) analog zu einem anderen zweiten Datenkonverter (106, 206, 210, 306, 310, 406, 410, 430) konfiguriert ist und wobei das Hot-Standby-Funkgerät (212, 312, 412) analog zu einem anderen Funkgerät (108, 208, 212, 308, 312, 408, 412, 432) konfiguriert ist.

6. Kommunikationssystem (100, 200, 300, 400) nach einem der vorhergehenden Ansprüche, wobei das Funkgerät (108, 208, 212, 308, 312, 408, 412, 432) so konfiguriert ist, dass es ankommende Funkkommunikationen empfängt und den zweiten Datenkonverter (106, 206, 210, 306, 310, 406, 410, 430) mit einem stromabwärts gerichteten seriellen Datenstrom versorgt, und
wobei der zweite Datenkonverter (106, 206, 210, 306, 310, 406, 410, 430) so konfiguriert ist, dass er den stromabwärts gerichteten seriellen Datenstrom empfängt und den stromabwärts gerichteten seriellen Datenstrom in einen stromabwärts gerichteten paketbasierten Datenstrom umwandelt und den stromabwärts gerichteten paketbasierten Datenstrom über das paketbasierte Netzwerk (105, 205, 305, 405) an den ersten Datenkonverter (103, 203, 303, 403) liefert,
insbesondere wobei der zweite Datenkonverter (106, 206, 210, 306, 310, 406, 410, 430) für die Datenübertragung an den ersten Datenkonverter (103, 203, 303, 403) die Fähigkeiten des ersten Datenkonverters (103, 203, 303, 403) zur Datenübertragung an den zweiten Datenkonverter (106, 206, 210, 306, 310, 406, 410, 430) aufweist.

7. Verfahren zum Betreiben eines Kommunikationssystems (100, 200, 300, 400) mit einer Datenquelle (101, 201, 301, 401), die mit einem ersten Datenkonverter (103, 203, 303, 403) gekoppelt ist, mindestens zwei zweiten Datenkonvertern (106, 206, 210, 306, 310, 406, 410, 430), die jeweils zwischen zwei verschiedenen einer Vielzahl von Funkgeräten (108, 208, 212, 308, 312, 408, 412, 432) und einem paketbasierten Netzwerk (105, 205, 305, 405), das zwischen dem ersten Datenkonverter (103, 203, 303, 403) und den mindestens zwei zweiten Datenkonvertern (106, 206, 210, 306, 310, 406, 410, 430) gekoppelt ist, wobei das Verfahren die folgenden Schritte aufweist:
Erzeugen (S1) eines ersten seriellen Datenstroms (102, 202, 302, 402) in der Datenquelle (101, 201, 301, 401), wobei der erste serielle Datenstrom (102, 202, 302, 402) Daten aufweist, die über das Kommunikationssystem (100, 200, 300, 400) übertragen werden sollen,
Konvertieren (S2) des ersten seriellen Datenstroms (102, 202, 302, 402) in dem ersten Datenkonverter (103, 203, 303, 403) in einen ausgehenden paketbasierten Datenstrom (104, 204, 304, 404),
Ausgeben (S3) des ausgehenden paketbasierten Datenstroms (104, 204, 304, 404) von dem ersten Datenkonverter (103, 203, 303, 403) in das paketbasierte Netzwerk (105, 205, 305, 405),
Empfangen (S4) des ausgehenden paketbasierten Datenstroms (104, 204, 304, 404) in den mindestens zwei zweiten Datenkonvertern (106, 206, 210, 306, 310, 406, 410, 430) über das paketbasierte Netzwerk (105, 205, 305, 405),
Konvertieren (S5) des ausgehenden paketbasierten Datenstroms (104, 204, 304, 404) in den zweiten Datenkonvertern (106, 206, 210, 306, 310, 406, 410, 430) in einen zweiten seriellen Datenstrom (107, 207, 211, 307, 311, 407, 411, 431),
Bereitstellen (S6) des zweiten seriellen Datenstroms (107, 207, 211, 307, 311, 407, 411, 431) an die jeweiligen Funkgeräte (108, 208, 212, 308, 312, 408, 412, 432),
Ausgeben (S7) des zweiten seriellen Datenstroms (107, 207, 211, 307, 311, 407, 411, 431) als Funksignal (109, 209, 309, 409) durch die jeweiligen Funkgeräte (108, 208, 212, 308, 312, 408, 412, 432), und
**gekennzeichnet durch**
Überwachen des Zustands (216, 316, 416) der mehreren Funkgeräte (108, 208, 212, 308, 312, 408, 412, 432) und Anzeigen, ob die überwachten Funkgeräte (108, 208, 212, 308, 312, 408, 412, 432) in einem Betriebszustand sind.

8. Verfahren nach Anspruch 7, wobei das Ausgeben des ausgehenden paketbasierten Datenstroms (104, 204, 304, 404) das Bereitstellen des ausgehenden paketbasierten Datenstroms (104, 204, 304, 404) über das paketbasierte Netzwerk (105, 205, 305, 405) an einen der zweiten Datenkonverter (106, 206, 210, 306, 310, 406, 410, 430) auf der Grundlage des Zustands (216, 316, 416) der zweiten Datenkonverter (106, 206, 210, 306, 310, 406, 410, 430) und der Funkgeräte (108, 208, 212, 308, 312, 408, 412, 432), wie durch die Überwachung angezeigt; und/oder
aufweisend das Empfangen des ausgehenden paketbasierten Datenstroms (104, 204, 304, 404) von dem ersten Datenkonverter (103, 203, 303, 403) in einem Signalrouter (320, 420) und das Weiterleiten des empfangenen ausgehenden paketbasierten Datenstroms (104, 204, 304, 404) von dem Signalrouter (320, 420) an eines der Vielzahl von Funkgeräten (108, 208, 212, 308, 312, 408, 412, 432), das durch die Überwachung als in einem Betriebszustand befindlich identifiziert wird.

9. Verfahren nach einem der vorhergehenden Ansprüche 7 bis 8, dass das Speichern der Funkfähigkeiten (426) aller Funkgeräte (108, 208, 212, 308, 312, 408, 412, 432) im Kommunikationssystem (100, 200, 300, 400) in einer Fähigkeitsdatenbank (425) aufweist,
wobei für den Fall, dass während der Überwachung festgestellt wird, dass sich ein Funkgerät (108, 208, 212, 308, 312, 408, 412, 432) in einem nicht betriebsbereiten Zustand befindet, ein Funkgerät (108, 208, 212, 308, 312, 408, 412, 432) mit der Fähigkeit, das Funkgerät (108, 208, 212, 308, 312, 408, 412, 432) zu ersetzen, das sich in einem nicht betriebsbereiten Zustand befindet, ausgewählt und so konfiguriert, dass es das nicht betriebsbereite Funkgerät (108, 208, 212, 308, 312, 408, 412, 432) entsprechend auf der Grundlage der gespeicherten Funkfähigkeiten (426) ersetzt.

10. Verfahren nach einem der vorhergehenden Ansprüche 7 bis 9, das aufweist, einen zweiten Hot-Standby-Datenkonverter (106, 206, 210, 306, 310, 406, 410, 430) und ein Hot-Standby-Funkgerät (212, 312, 412) analog zu einem anderen zweiten Datenkonverter (106, 206, 210, 306, 310, 406, 410, 430) und einem anderen Funkgerät (108, 208, 212, 308, 312, 408, 412, 432) zu konfigurieren.

11. Verfahren nach einem der vorhergehenden Ansprüche 7 bis 10, das aufweist:
Empfangen von eingehenden Funkkommunikationen über das Funkgerät (108, 208, 212, 308, 312, 408, 412, 432) und Versorgen des zweiten Datenkonverters (106, 206, 210, 306, 310, 406, 410, 430) mit einem stromabwärts gerichteten seriellen Datenstrom von dem Funkgerät (108, 208, 212, 308, 312, 408, 412, 432),
Konvertieren des stromabwärts gerichteten seriellen Datenstroms in einen stromabwärts gerichteten paketbasierten Datenstrom in dem zweiten Datenkonverter (106, 206, 210, 306, 310, 406, 410, 430), und
Bereitstellen des stromabwärts gerichteten seriellen Datenstroms über das paketbasierte Netzwerk (105, 205, 305, 405) an den ersten Datenkonverter (103, 203, 303, 403),
insbesondere wobei der zweite Datenkonverter (106, 206, 210, 306, 310, 406, 410, 430) zur Datenübertragung an den ersten Datenkonverter (103, 203, 303, 403) mit den Fähigkeiten des ersten Datenkonverters (103, 203, 303, 403) zur Datenübertragung an den zweiten Datenkonverter (106, 206, 210, 306, 310, 406, 410, 430) vorgesehen ist.

## Revendications

1. - Système de communication (100, 200, 300, 400) comprenant
une source de données (101, 201, 301, 401) configurée pour générer un premier flux de données en série (102, 202, 302, 402), le premier flux de données en série (102, 202, 302, 402) comprenant des données à transmettre par l'intermédiaire du système de communication (100, 200, 300, 400),
un premier convertisseur de données (103, 203, 303, 403) couplé à la source de données (101, 201, 301, 401) et configuré pour recevoir le premier flux de données en série (102, 202, 302, 402) et pour convertir le premier flux de données en série (102, 202, 302, 402) en un flux de données par paquets sortant (104, 204, 304, 404),
un réseau à base de paquets (105, 205, 305, 405), le premier convertisseur de données (103, 203, 303, 403) étant couplé au réseau à base de paquets (105, 205, 305, 405) et étant configuré pour délivrer le flux de données par paquets sortant (104, 204, 304, 404) dans le réseau à base de paquets (105, 205, 305, 405),
au moins deux seconds convertisseurs de données (106, 206, 210, 306, 310, 406, 410, 430) couplés au réseau à base de paquets (105, 205, 305, 405) et configurés pour recevoir le flux de données par paquets sortant (104, 204, 304, 404) et pour convertir le flux de données par paquets sortant (104, 204, 304, 404) en un second flux de données en série (107, 207, 211, 307, 311, 407, 411, 431),
une pluralité de radios (108, 208, 212, 308, 312, 408, 412, 432), les au moins deux seconds convertisseurs de données (106, 206, 210, 306, 310, 406, 410, 430) étant couplés entre le réseau à base de paquets (105, 205, 305, 405) et au moins deux radios différentes de la pluralité de radios (108, 208, 212, 308, 312, 408, 412, 432), les seconds convertisseurs de données (106, 206, 210, 306, 310, 406, 410, 430) étant configurés pour fournir le second flux de données en série (107, 207, 211, 307, 311, 407, 411, 431) aux radios respectives (108, 208, 212, 308, 312, 408, 412, 432), et les radios (108, 208, 212, 308, 312, 408, 412, 432) étant configurées pour délivrer le second flux de données en série (107, 207, 211, 307, 311, 407, 411, 431) sous forme de signal radio (109, 209, 309, 409), et
**caractérisé par**
un dispositif de surveillance (215, 315, 415) configuré pour surveiller l'état (216, 316, 416) de la pluralité de radios (108, 208, 212, 308, 312, 408, 412, 432) et pour indiquer si les radios surveillées (108, 208, 212, 308, 312, 408, 412, 432) sont dans un état fonctionnel.

2. - Système de communication (100, 200, 300, 400) selon la revendication 1, dans lequel le premier convertisseur de données (103, 203, 303, 403) est configuré pour fournir le flux de données par paquets sortant (104, 204, 304, 404) sur le réseau à base de paquets (105, 205, 305, 405) à l'un des seconds convertisseurs de données (106, 206, 210, 306, 310, 406, 410, 430) en fonction de l'état (216, 316, 416) des seconds convertisseurs de données (106, 206, 210, 306, 310, 406, 410, 430) et des radios (108, 208, 212, 308, 312, 408, 412, 432) tel qu'indiqué par le dispositif de surveillance (215, 315, 415).

3. - Système de communication (100, 200, 300, 400) selon la revendication 1, comprenant :
un routeur de signal (320, 420) disposé dans le réseau à base de paquets (105, 205, 305, 405) et configuré pour recevoir le flux de données par paquets sortant (104, 204, 304, 404) provenant du premier convertisseur de données (103, 203, 303, 403),
le routeur de signal (320, 420) étant configuré pour transférer le flux de données par paquets sortant reçu (104, 204, 304, 404) à l'une de la pluralité de radios (108, 208, 212, 308, 312, 408, 412, 432) qui est identifiée par le dispositif de surveillance (215, 315, 415) comme étant dans un état fonctionnel.

4. - Système de communication (100, 200, 300, 400) selon l'une quelconque des revendications précédentes 2 à 5, comprenant une base de données de capacités (425) configurée pour stocker les capacités radio (426) de toutes les radios (108, 208, 212, 308, 312, 408, 412, 432) du système de communication (100, 200, 300, 400), et
une unité de commande (427) couplée au dispositif de surveillance (215, 315, 415) et à la base de données de capacités (425),
dans lequel, si le dispositif de surveillance (215, 315, 415) détecte qu'une radio (108, 208, 212, 308, 312, 408, 412, 432) n'est pas dans un état fonctionnel, l'unité de commande (427) est configurée pour sélectionner, sur la base des capacités radio stockées (426), une radio (108, 208, 212, 308, 312, 408, 412, 432) ayant la capacité de remplacer la radio (108, 208, 212, 308, 312, 408, 412, 432) qui n'est pas dans un état fonctionnel, et pour configurer la radio (108, 208, 212, 308, 312, 408, 412, 432) ayant la capacité de remplacer la radio non-fonctionnelle (108, 208, 212, 308, 312, 408, 412, 432) en conséquence.

5. - Système de communication (100, 200, 300, 400) selon l'une quelconque des revendications précédentes, comprenant un second convertisseur de données de secours immédiat (106, 206, 210, 306, 310, 406, 410, 430) et une radio de secours immédiat (212, 312, 412), dans lequel le second convertisseur de données de secours immédiat (106, 206, 210, 306, 310, 406, 410, 430) est configuré de manière analogue à un autre second convertisseur de données (106, 206, 210, 306, 310, 406, 410, 430), et dans lequel la radio de secours immédiat (212, 312, 412) est configurée de manière analogue à une autre radio (108, 208, 212, 308, 312, 408, 412, 432).

6. - Système de communication (100, 200, 300, 400) selon l'une quelconque des revendications précédentes, dans lequel la radio (108, 208, 212, 308, 312, 408, 412, 432) est configurée pour recevoir des communications radio entrantes et pour fournir, au second convertisseur de données (106, 206, 210, 306, 310, 406, 410, 430), un flux de données en série de liaison descendante, et
dans lequel le second convertisseur de données (106, 206, 210, 306, 310, 406, 410, 430) est configuré pour recevoir le flux de données en série de liaison descendante et convertir le flux de données en série de liaison descendante en un flux de données par paquets de liaison descendante et fournir le flux de données par paquets de liaison descendante sur le réseau à base de paquets (105, 205, 305, 405) au premier convertisseur de données (103, 203, 303, 403),
dans lequel, en particulier, le second convertisseur de données (106, 206, 210, 306, 310, 406, 410, 430) comprend, pour une transmission de données au premier convertisseur de données (103, 203, 303, 403), les capacités du premier convertisseur de données (103, 203, 303, 403) pour la transmission de données au second convertisseur de données (106, 206, 210, 306, 310, 406, 410, 430).

7. - Procédé de fonctionnement d'un système de communication (100, 200, 300, 400) avec une source de données (101, 201, 301, 401) couplée à un premier convertisseur de données (103, 203, 303, 403), au moins deux seconds convertisseurs de données (106, 206, 210, 306, 310, 406, 410, 430), chacun couplé entre deux radios différentes d'une pluralité de radios (108, 208, 212, 308, 312, 408, 412, 432) et un réseau à base de paquets (105, 205, 305, 405) couplé entre le premier convertisseur de données (103, 203, 303, 403) et les au moins deux seconds convertisseurs de données (106, 206, 210, 306, 310, 406, 410, 430), le procédé comprenant les étapes suivantes :
générer (S1) un premier flux de données en série (102, 202, 302, 402) dans la source de données (101, 201, 301, 401), le premier flux de données en série (102, 202, 302, 402) comprenant des données à transmettre par l'intermédiaire du système de communication (100, 200, 300, 400),
convertir (S2), dans le premier convertisseur de données (103, 203, 303, 403), le premier flux de données en série (102, 202, 302, 402) en un flux de données par paquets sortant (104, 204, 304, 404),
délivrer (S3) le flux de données par paquets sortant (104, 204, 304, 404) à partir du premier convertisseur de données (103, 203, 303, 403) dans le réseau à base de paquets (105, 205, 305, 405),
recevoir (S4) le flux de données par paquets sortant (104, 204, 304, 404) dans les au moins deux seconds convertisseurs de données (106, 206, 210, 306, 310, 406, 410, 430) par l'intermédiaire du réseau à base de paquets (105, 205, 305, 405),
convertir (S5) le flux de données par paquets sortant (104, 204, 304, 404) dans les seconds convertisseurs de données (106, 206, 210, 306, 310, 406, 410, 430) en un second flux de données en série (107, 207, 211, 307, 311, 407, 411, 431),
fournir (S6) le second flux de données en série (107, 207, 211, 307, 311, 407, 411, 431) aux radios respectives (108, 208, 212, 308, 312, 408, 412, 432),
délivrer (S7) le second flux de données en série (107, 207, 211, 307, 311, 407, 411, 431) sous forme de signal radio (109, 209, 309, 409) par les radios respectives (108, 208, 212, 308, 312, 408, 412, 432), et
**caractérisé par**
surveiller l'état (216, 316, 416) de la pluralité de radios (108, 208, 212, 308, 312, 408, 412, 432) et indiquer si les radios surveillées (108, 208, 212, 308, 312, 408, 412, 432) sont dans un état fonctionnel.

8. - Procédé selon la revendication 7, dans lequel la délivrance du flux de données par paquets sortant (104, 204, 304, 404) comprend la fourniture du flux de données par paquets sortant (104, 204, 304, 404) sur le réseau à base de paquets (105, 205, 305, 405) à l'un des seconds convertisseurs de données (106, 206, 210, 306, 310, 406, 410, 430) en fonction de l'état (216, 316, 416) des seconds convertisseurs de données (106, 206, 210, 306, 310, 406, 410, 430) et des radios (108, 208, 212, 308, 312, 408, 412, 432) tel qu'indiqué par la surveillance ; et/ou
comprenant la réception du flux de données par paquets sortant (104, 204, 304, 404) en provenance du premier convertisseur de données (103, 203, 303, 403) dans un routeur de signal (320, 420), et la transfert du flux de données par paquets sortant reçu (104, 204, 304, 404) en provenance du routeur de signal (320, 420) à l'une de la pluralité de radios (108, 208, 212, 308, 312, 408, 412, 432) qui est identifiée par la surveillance comme étant dans un état fonctionnel.

9. - Procédé selon l'une quelconque des revendications précédentes 7 à 8, comprenant le stockage des capacités radio (426) de toutes les radios (108, 208, 212, 308, 312, 408, 412, 432) du système de communication (100, 200, 300, 400) dans une base de données de capacités (425),
dans lequel si, pendant la surveillance, une radio (108, 208, 212, 308, 312, 408, 412, 432) est détectée comme étant dans un état non-fonctionnel, une radio (108, 208, 212, 308, 312, 408, 412, 432) ayant la capacité de remplacer la radio (108, 208, 212, 308, 312, 408, 412, 432) qui est dans un état non-fonctionnel est sélectionnée et configurée pour remplacer la radio non-fonctionnelle (108, 208, 212, 308, 312, 408, 412, 432) en conséquence sur la base des capacités radio stockées (426).

10. - Procédé selon l'une quelconque des revendications précédentes 7 à 9, comprenant la configuration d'un second convertisseur de données de secours immédiat (106, 206, 210, 306, 310, 406, 410, 430) et d'une radio de secours immédiat (212, 312, 412) de manière analogue à un autre second convertisseur de données (106, 206, 210, 306, 310, 406, 410, 430) et à une autre radio (108, 208, 212, 308, 312, 408, 412, 432).

11. - Procédé selon l'une quelconque des revendications précédentes 7 à 10, comprenant la réception de communications radio entrantes par l'intermédiaire de la radio (108, 208, 212, 308, 312, 408, 412, 432) et la fourniture, au second convertisseur de données (106, 206, 210, 306, 310, 406, 410, 430), d'un flux de données en série de liaison descendante provenant de la radio (108, 208, 212, 308, 312, 408, 412, 432),
la conversion du flux de données en série de liaison descendante en un flux de données par paquets de liaison descendante dans le second convertisseur de données (106, 206, 210, 306, 310, 406, 410, 430), et
la fourniture du flux de données en série de liaison descendante sur le réseau à base de paquets (105, 205, 305, 405) au premier convertisseur de données (103, 203, 303, 403),
en particulier, le second convertisseur de données (106, 206, 210, 306, 310, 406, 410, 430) étant prévu pour une transmission de données au premier convertisseur de données (103, 203, 303, 403) avec les capacités du premier convertisseur de données (103, 203, 303, 403) pour la transmission de données au second convertisseur de données (106, 206, 210, 306, 310, 406, 410, 430).
